## Europäisches Patentamt
## European Patent Office
## Office européen des brevets

(19)

(11) Numéro de publication: **0 030 903**
**B1**

(12) **FASCICULE DE BREVET EUROPEEN**

(45) Date de publication du fascicule du brevet: **14.12.83**

(51) Int. Cl.³: **C 08 L 77/00**

(21) Numéro de dépôt: **80420135.8**

(22) Date de dépôt: **09.12.80**

(54) Compositions de polyamides polyphasées ayant des propriétés de résistance au choc améliorées et leurs procédés de préparation.

(30) Priorité: **10.12.79 FR 7930648**
**05.03.80 FR 8005272**

(43) Date de publication de la demande:
**24.06.81 Bulletin 81/25**

(45) Mention de la délivrance du brevet:
**14.12.83 Bulletin 83/50**

(84) Etats contractants désignés:
**AT BE CH DE FR GB IT LI LU NL SE**

(56) Documents cités:
**FR - A - 1 491 112**
**FR - A - 2 311 814**
**GB - A - 998 439**
**US - A - 3 388 186**
**US - A - 3 465 059**
**US - A - 3 645 932**
**US - A - 3 668 274**
**US - A - 3 845 163**
**US - A - 4 062 819**

(73) Titulaire: **RHONE-POULENC SPECIALITES CHIMIQUES**
**"Les Miroirs" 18, Avenue d'Alsace**
**F-92400 Courbevoie (FR)**

(72) Inventeur: **Coquard, Jean**
**Route du Crest**
**F-69290 Grezieu La Varenne (FR)**
Inventeur: **Goletto, Jean**
**"Le Joli Mai" 2, rue Tramier**
**F-69130 Ecully (FR)**

(74) Mandataire: **Trolliet, Maurice et al,**
**RHONE-POULENC RECHERCHES Centre de Recherches de Saint-Fons Service Brevets B.P. 62**
**F-69190 Saint-Fons (FR)**

Courier Press, Leamington Spa, England.

# 0 030 903

Compositions de polyamides polyphasees ayant des proprietes de resistance au choc ameliorees
et leurs procedes de preparation

La présente invention concerne des compositions à base de polyamides ayant des propriétés améliorées de résistance au choc, de ductilité et de cristallisation associées à une très bonne stabilité thermique ainsi que des procédés pour préparer de telles compositions.

Les polyamides non modifiés, qui présentent une haute énergie de rupture, sont considérés comme des polymères tenaces. Ils sont par contre généralement assez déficients en ce qui concerne la résistance à la propagation de fissures ce que traduisent une certaine sensibilité aux entailles et éventuellement des ruptures par fragilisation. Ce défaut de rupture de manière cassante plutôt que ductile limite notablement leurs emplois et leur fiabilité.

L'amélioration de la résistance au choc des polyamides thermoplastiques a été très étudiée et de nombreuses solutions ont été proposées. Ainsi le brevet britannique 998 439 revendique une composition comprenant un mélange de 50 à 99% d'un polyamide linéaire et de 1 à 50% d'un copolymère oléfinique renfermant de 0,1 à 10 moles pour cent de groupements acides, dispersé dans la polyamide sous forme de particules d'un diamètre inférieur à 5 microns.

Les brevets USP 3 388 186 et 3 465 059 revendiquent des mélanges de polycaproamide et de copolymères d'oléfines contenant de 1 à 20% en moles d'acides (méth)acryliques ou leurs dérivés, greffés par un aminoacide.

Le brevet USP 3 668 274 décrit des mélanges de polyamides et de 2,5 à 30% d'un polymère multiphasé à groupements carboxyliques constitué par une première phase élastomérique (50 à 99,9% d'acrylate d'alkyle et de butadiène) sur laquelle est greffé un copolymère plus rigide renfermant de 1 à 50% en poids d'un acide carboxylique insaturé.

Le brevet USP 3 845 163 décrit des mélanges de 60 à 80% en poids d'un polyamide et de 15 à 40% en poids d'un copolymère d'$\alpha$ oléfine renfermant de 1 à 8% en mole d'un acide carboxylique $\alpha, \beta$ éthylénique dont au moins 10% des groupements acides sont neutralisés par des ions métalliques. Le brevet français 2 311 814 revendique de très nombreuses compositions de polyamides à phases multiples présentant une tenacité améliorée qui sont constituées par des mélanges réalisés à l'état fondu de 60 à 99% en poids d'un polyamide et de 1 à 40% en poids d'au moins une autre phase contenant des particules d'au moins un polymère ayant un module en traction inférieur au 1/10 de celui du polyamide, qui "adhère" au polyamide et dont la taille des particules est comprise entre 0,01 et 3 microns. Les polymères utilisables comme phase dispersée sont choisis parmi les polymères thermoplastiques ou élastomères, linéaires ou ramifiés non réticulés appartenant aux familles chimiques suivantes:

—copolymères de monomères insaturés et de molécules génératrices de sites adhérents comme:oxyde de carbone, acides carboxyliques à insaturation éthylèniques en $\alpha, \beta$ ou leurs dérivés, époxydes non saturés, résidus d'une sulfonylazide aromatique substituée par des acides carboxyliques.

—polyuréthannes dérivés de polyesterglycols ou de polyétherglycols

—polymères à mailles polyéther obtenus par réaction de monomères époxydés.

La plupart des additifs polymériques cités dant l'art antérieur présentent une stabilité thermique ou chimique, relativement faible, ce qui limite leur emploi dans le domaine des polyamides conventionnels où les conditions de préparation ou de mise en oeuvre sont très dures. Ainsi les polyuréthanes et polymères à maille polyéther décrits dans le brevet français 2 311 814 ne peuvent valablement être utilisés que dans le cas de matrices présentant des points de fusion inférieurs à 200—220°C.

Les très nombreux copolymères d'oléfine et de dérivés acryliques décrits dans l'art antérieur subissent également une décomposition très sensible lorsqu'ils sont mélangés à l'état fondu à des polyamides de haut point de fusion comme par exemple le polyhexaméthylène adipamide.

L'utilisation de polyamides ayant eux-mêmes une bonne stabilité thermique comme phase renforçante de compositions thermoplastiques à matrice polyamide n'a pas été décrit jusque là. Les mélanges de polyamides ou copolyamides conventionnels parmi lesquels on peut citer de façon non limitative le polycaprolactame, le polyhexaméthylène adipamide, le polyhexaméthylène sebacamide, le polyhexaméthylène dodécanamide et leurs copolymères présentent en effet à l'état fondu une instabilité chimique bien connue qui est due à l'existence de réactions d'interéchanges entre les séquences amides de différents natures. Il n'est donc généralement pas possible d'obtenir à l'état fondu und dispersion stable de particules d'un polyamide ou d'un copolyamide dans un autre polyamide. Un tel système évolue inévitablement et plus ou moins rapidement vers un copolyamide homogène formé d'abord de blocs polyamides qui évoluent eux-mêmes plus ou moins rapidement vers un copolyamide statistique.

On trouve dans l'art antérieur des additifs polyamides qui ont été utilisés pour modifier d'autres polyamides mais dans un but différent de celui de créer des compositions multiphasées stables, ces additifs polyamides étant par ailleurs différents de ceux de la présente invention. Ainsi le brevet USP 3 645 932 revendique la nucléation de polyamides dérivés d'acides gras polymères par 0,1 à 10% en poids d'un agent nucléant qui peut être un autre polyamide ayant généralement un haut point de fusion et présentant une grande aptitude à la cristallisation. Le brevet USP 4 062 829 revendique des

2

# 0 030 903

mélanges de polyamides thermoplastiques présentant des propriétés rhéologiques et d'écoulement améliorées constitués par 80% à 99,99% d'une résine polyamide et de 0,01% à 20% en poids d'un additif polyamide présentant un indice d'amine inférieur à 3 et obtenu par réaction d'un diacide aliphatique ou cycloaliphatique ayant de 18 à 52 atomes de carbone et d'un diacide aliphatique saturé ayant de 2 à 13 atomes de carbone pouvant représenter jusqu'a 30% en poids des acides, avec une quantité stoechiométrique d'une ou plusieurs diamines aliphatiques saturées ayant de 2 à 10 atomes de carbone. Les additifs polyamides décrits présentent des points de fusion ralativement élevés et sont pratiquemment compatibles avec les résines polyamides de base. Les compositions obtenues présentent des propriétés d'écoulement améliorées, une flexibilité un peu plus élevée et des vitesses de cristallisation qui ne sont pas significativement inférieures à celles de la matrice lorsque la teneur en additif ne dépasse pas 10%. Les résistances aux chocs de telles compositions, ne sont pas significativement supérieures à celles des polyamides de base purs. Dans le cas du polyamide 66 la résistance aux chocs est abaissée de 14% par la présence de 2% d'additifs alors que dans le cas de polyamide 6, elle augmente de 9,5% avec 2% d'additifs mais retombe à 15,5% en dessous de celle de la résine de base avec 10% d'additif.

Il a maintenant été trouvé des compositions polyphasées à base de polyamides ayant des propriétés physiques améliorées et particulièrement stables à haute température constituées essentiellement d'une phase formant matrice qui est une résine polyamide et d'au moins une autre phase dispersée polyamide incompatible avec la première, comme il est indiqué à la revendication 1. On préférera les polyamides ayant une température de transition vitreuse inférieure à −10°C.

Ces compositions polyphasées sont constituées par 50 à 99% en poids d'une matrice et par 1 à 50% en poids de phase dispersée et de préférence par 55 à 99% en poids d'une matrice et par 1 à 45% en poids de phase dispersée.

Un autre aspect de l'invention concerne des procédés particuliers qui ont été mis au point pour préparer les compositions selon l'invention. Par compositions polyphasées, on entend des compositions constituées par au moins deux phases qui tant à l'état solide qu'à l'état fondu restent différenciées. On distingue la phase principale ou matrice de la phase ou des phases renforçantes qui sont dispersées dans la matrice.

L'expression "constituées essentiellement par" signifie qu'en plus de la résine polyamide formant matrice et de la ou des phases dispersées, d'autres constituants peuvent être présents dans la composition à condition sur les caractéristiques essentielles de ladite composition ne soient pas modifiées de façon notoire par ces constituants.

Par l'expression "au moins une autre phase dispersée sous forme de particules ayant une taille comprise entre 0,01 et 10 microns", on entend qu'au moins une phase dispersée sous forme de particule ayant de 0,01 à 10 microns de dimensions maximum à base de polyamide répondant à la définition donnée est présente dans la composition. Il peut se trouver en plus une certaine proportion minoritaire d'un ou plusieurs autres polymères sous forme de particules de 0,01 à 10 microns.

Un ou plusieurs polyamides répondant à la définition donnée constituent la phase dispersée qui peut de plus renfermer une certaine proportion d'autre polymère, pour autant que les caractéristiques essentielles de la composition ne soient pas dégradées. Cet autre ou ces autres polymères en proportion minoritaire éventuellement présents dans la phase dispersée en plus de la phase dispersée polyamide sont éventuellement constitués par des polymères renforçants tels que ceux décrits dans les brevets cités plus haut dans l'art antérieur.

La résine polyamide formant matrice dans les compositions selon l'invention est une résine bien connue dans l'art antérieur et englobe les résines semi-cristallines et amorphes ayant une masse moléculaire d'au moins 5000 et couramment appelées nylons. Les polyamides utilisables comprennent ceux décrits dans les brevents des E.U.A. 2 071 250; 2 071 251; 2 130 523; 2 130 948; 2 241 322; 2 312 966; 2 512 606 et 3 393 210. La résine polyamide peut être produite par condensation de quantités équimoléculaires d'un acide dicarboxylique saturé contenant de 4 à 12 atomes de carbone avec une diamine, la diamine contenant de 4 à 14 atomes de carbone. On peut utiliser un excès de diamine de manière à obtenir un excès de groupes terminaux amines par rapport aux groupes terminaux carboxyles dans le polyamide ou un excès de diacide de manière à obtenir un excès de groupes terminaux carboxyles par rapport aux groupes terminaux amines dans le polyamide.

Pour pouvoir contrôler la masse moléculaire des polymères obtenus, on emploie habituellement un agent limiteur de chaîne. La quantité mise en oeuvre d'un tel agent dépend de la zone de poids moléculaire désirée. Toutefois, on emploie généralement de 0,1 à 2% en moles par rapport aux sels. Les agents limiteurs de chaîne sont choisis dans la groupe constitué par les acides carboxyliques et les amines aliphatiques.

Des exemples de polyamides comprennent la polyhexaméthylène adipamide (nylon 6,6), le polyhexaméthylène azélamide (nylon 6,9), le polyhexaméthylène sébacamide (nylon 6,10) et le polyhexaméthylène dodécanamide (Nylon 6,12), les polyamides produits par décyclisation de lactames, c'est-à-dire le polycaprolactame, le poly-(lactame laurique), le poly(acide 11-amino-undécanoïque), le bis(para-aminocyclohexyl)-méthane dodécanamide. Il est possible aussi d'utiliser dans la présente invention des polyamides préparés par la copolymérisation de deux des polymères ci-dessus ou par la terpolymérisation des polymères ci-dessus ou de leurs constituants, par exemple un copolymère

3

d'acide adipique, d'acide isophtalique et d'hexaméthylène-diamine. De préférence, les polyamides sont linéaires avec un point de fusion au-dessus de 200°C.

Les polyamides constituant la ou les phases renforçantes dispersées dans la matrice sont des polyamides ou copolyamides linéaires, ramifiés ou réticulés. Dans ce dernier cas la réticulation doit être telle que la température de transition vitreuse (Tg) ne s'élève pas au-dessus de 5°C et elle a dû être conduite de façon à permettre l'obtention d'une taille de particule conforme à l'invention. Un procédé pour réaliser aisément une composition à phase dispersée réticulée est décrit dans la présente invention.

Les polyamides ou copolyamides linéaires utilisables comme phase renforçante sont obtenus par polycondensation de lactame ou de mélanges de lactames, de diacides et de diamines ou de mélanges de diacides et de diamines. Les diacides ou diamines utilisés peuvent éventuellement renfermer dans leur enchainement un ou plusieurs hétéroatomes comme par exemple l'oxygène: on a alors un enchainement éther ou polyéther; le soufre: on a alors un enchainement thio ou polythio; l'azote: on a alors un enchainement imine ou polyimine.

Ils peuvent aussi éventuellement renfermer une ou plusieurs double liaisons. Les polyamides ou copolyamides ramifiés ou réticulés utilisables comme phases renforçantes sont obtenus à partir de réactifs de même type que ceux utilisés pour les polyamides ou copolyamides linéaires mais dont une partie est constituée par des molécules ayant au moins trois fonctions réactives de natures identiques ou différentes. Les polyamides selon l'invention devant renfermer une teneur en groupements amides inférieur à 40% de celle de la matrice, il sera nécessaire d'utiliser pour leur préparation des monomères dont l'un au moins devra présenter un poids moléculaire au moins 2,5 fois supérieur au poids moléculaire moyen des monomères de la matrice. A titre d'exemples non limitatifs et selon la nature de la matrice choisie, on pourra utiliser des diacides et/ou des diamines polymères ou des polyéthers diamines ou diacides. Les diacides et diamines à longue chaîne et à haut poids moléculaire utilisables selon l'invention peuvent être aliphatiques ou cycloaliphatiques et contiennent plus de 18 atomes de carbone. Les chaînes peuvent être droites ou éventuellement présenter des branches alkyles. Dans le cas des polyamides, ou copolyamides essentiellement linéaires, les acides dicarboxyliques utilisés industriellement peuvent contenir de petites quantités de monoacides et/ou de polyacides; toutefois le taux de diacides doit être supérieur à 80%.

Les acides dicarboxyliques particulièrement intéressants selon l'invention sont des acides obtenus par dimérisation d'acides gras ayant de 16 à 26 atomes de carbone comme les acides oléique, linoléique, linolénique, oléostéarique ou leurs mélanges. Les diacides obtenus par dimérisation des acides en C 18 comme l'acide oléique, linoléique ou leur mélange sont particulièrement intéressants.

Ces acides dimères contiennent inévitablement une certaine proportion d'acide mono-carboxylique ou d'acides polymères en majeure partie acides trimères.

On a intérêt à utiliser des acides dimères ayant un taux en dimère supérieur à 90% en poids.

De la même façon les diamines utilisées industriellement peuvent contenir un certain pourcentage de monoamine et/ou de polyamine. Les polyamines particulièrement intéressantes selon l'invention sont des polyamines ayant de 32 à 60 atomes de carbone obtenues à partir de dimères d'acides gras ayant de 16 à 26 atomes des carbone et qui peuvent contenir une certaine proportion d'amide monomère et/ou polymère en majeure partie trimère. On a intérêt à utiliser des diamines dimères ayant un taux en dimère supérieur à 90% en poids.

Dans la cas des polyamides ou copolyamides ramifiés ou réticulés selon l'invention, qui peuvent présenter un intérêt dans certains cas, les réactifs ayant au moins trois fonctions réactives utilisables pour leurs préparations et, à titre non limitatif, sont par exemple:

les triamines comme la bishexaméthylène triamine ou les amines trimères obtenues à partir de trimère d'acide gras ayant de 16 à 26 atomes de carbone.

——les triacides comme les trimères d'acides gras ayant de 16 à 26 atomes de carbone, les acides 1, 2, 4 benzène tricarboxylique et 1,3,5 benzènetricarboxylique, les acides tétracarboxyliques comme l'acide 1,2,4,5-benzènetétracarboxylique ...

——les acides insatufes et plus particulièrement les diacides insaturés comme l'acide itaconique. Dans ce dernier cas la réticulation est atteinte par la polymérisation des doubles liaisons qui requierent généralement la présence d'initiateurs ou de comonomères insaturés.

Les polyamides utilisés comme phase renforçante ne renferment pas dans leur structure, à côté des séquences amides, de séquences du type ester ou carbonate.

Les autres polymères pouvant entrer dans la composition des phases dispersées selon l'invention sont d'une manière générale les polymères présentant vis à vis des polyamides utilisés pour la phase dispersée une miscibilité totale ou partielle dans une gamme de température comprise entre 20°C et 300°C. Les polymères répondant à cette caractéristique et porteurs de groupements fonctionnels réactifs vis à vis des polyamides, sont particulièrement intéressants comme agents de réticulation des polyamides utilisés comme phase renforçante selon l'invention.

Les compositions selon l'invention peuvent naturellement être modifiées par un ou plusieurs additifs tels que des stabilisants et des inhibiteurs de dégradation par oxydation, par l'ultraviolet ou la lumière, ou par la chaleur; des lubrifiants et des agents de démoulage, des matières colorantes

4

comprenant les colorants et les pigments, des charges et renforcements fibreux et en particules, des agents de nucléation, des plastifiants, etc...

Les stabilisants peuvent être incorporés dans la composition à un stade quelconque de la préparation de la composition thermoplastique. De préférence, les stabilisants sont inclus assez tôt pour empêcher un début de dégradation avant que la composition puisse être protégée. Ces stabilisants doivent être compatibles avec la composition.

Les agents de stabilisation à l'oxydation et à la chaleur utiles dans les matières de la présente invention comprennent ceux utilisés généralement dans les polyamides. Ils comprennent, par exemple, jusqu'à I% en poids, par rapport au poids du polyamide, d'halogénures de métaux du groupe I, par exemple de sodium, de potassium, de lithium avec des halogénures cuivreux, par exemple du chlorure, du bromure, de l'iodure, des phénols stériquement empêchés, des hydroquinones et divers membres substitués de ces groupes et leurs combinaisons.

Les agents de stabilisation à l'ultraviolet, par exemple dans une proportion allant jusqu'à 2%, par rapport au poids de polyamide, peuvent aussi être ceux utilisés habituellement avec les polyamides.

Comme exemples, on peut mentionner divers résorcinols substitués, salicylates, benzotriazoles, benzophénones, etc....

Des lubrifiants et agents de démoulage utilisables, par exemple dans une proportion allant jusqu'à 10% par rapport au poids de la composition, sont l'acide stéarique, l'alcool stéarique, les stéaramides; des colorants organiques, des pigments, par exemple le bioxyde de titane, le noir de carbone etc... peuvent être utilisés à des taux allant jusqu'à 5% en poids par exemple.

Les charges et renforcants fibreux ou en particules, par exemple des fibres de carbone, des fibres de verre, de la silice amorphe, de l'amiante, du silicate de calcium, du silicate d'aluminium, du carbonate de magnésium, du kaolin, de la craie, du quartz pulvérisé, du mica, du feldspath, etc... peuvent être présentes dans des proportions allant jusqu'à 50% par rapport au poids de la composition dans la mesure où les propriétés mécaniques recherchées ne sont pas notoirement dégradées.

Les compositions peuvent aussi contenir des agents nucléants, par exemple du talc, du fluorure de calcium, du phényl phosphinate de sodium, de l'alumine et du polytétrafluoroéthylène finement divisé, etc... des plastifiants, dans des proportions allant jusqu'à environ 20% par rapport au poids de la composition, par exemple du phtalate de dioctyle, du phtalate de dibenzyle, du phtalate de butyle et de benzyle, des huiles d'hydrocarbures, du N-n-butylbenzène sulfonamide, de l'ortho et du paratoluène-éthyl sulfonamides, etc...

Selon un autre aspect de la présente invention, on a défini des procédés pour la préparation des compositions multiphasées à base de polyamides selon l'invention.

Dans un premier procédé, on mélange dans un système clos, à une température supérieure au point de fusion de la résine polyamide servant de matrice et dans des conditions de cisaillement qui permettent de disperser les polymères renforçants dans la matrice, en particules de dimensions comprises entre 0,01 et 10 $\mu$m, de 55 à 99% en poids par rapport au mélange de polymères, d'une résine polyamide formant matrice ayant une masse moléculaire moyenne en nombre d'au moins 5000 mais de préférence supérieure à 10 000 et de I à 45% en poids d'un ou plusieurs polymères renforçants dont au moins 20% en poids sont constitués par un polyamide présentant une température de transition vitreuse inférieure à 5°C et une teneur en groupements amides inférieure à 40% de celle de la résine polyamide servant de matrice, ce polyamide renforçant étant linéaire ou faiblement réticulé. La masse moléculaire moyenne en nombre du polyamide renforçant doit être supérieure à 5 000 et de préférence supérieure à 15 000.

Les conditions; de cisaillement sont difficilement déterminées de façon générale. Elles dépendent entre autre de la température de fusion des polyamides présents, de leur viscosité fondue à température de travail. On peut agir essentiellement sur la durée du cisaillement déterminé par la machine: le nombre de vis, les profils des vis, l'écartement avec le fût de l'extrudeuse etc...

Seule l'expérience permet de déterminer les conditions optimales.

Dans un second procédé, on mélange dans un système permettant un dégazage, à une température supérieure au point de fusion de la résine polyamide servant de matrice et dans des conditions de cisaillement qui permettent de disperser dans la matrice les polymères renforçants en particules de dimensions comprises entre 0,01 et 10 microns, de 55 à 99% en poids par rapport au mélange de polymères, d'une résine polyamide formant matrice ayant une masse moléculaire moyenne en nombre de 2 000 à 10 000 et de 1 à 45% en poids d'un ou plusieurs polymères renforçants dont au moins 20% en poids sont constitués par un polyamide ayant une masse moléculaire supérieure à 5 000 et de préférence supérieure à 15 000. Ce polyamide doit présenter une température de transition vitreuse inférieure à 5°C et avoir une teneur en groupements amides inférieure à 40% de celle de la résine polyamide servant de matrice.

On réalise ainsi en même temps, la dispersion du ou des polymères renforçant et la finition de la polycondensation du polyamide servant de matrice.

Comme dans le procédé décrit plus haut, il est difficile de préciser "in abstracto" les conditions de cisaillement qui outre la nature et les quantités relatives dupolymère formant matrice et du ou des polymères servant de phase renforçante dépendent aussi de la température, de l'appareillage. Le facteur que l'on peut faire varier le plus facilement est la durée de l'opération qui doit toutefois permettre à la fois l'achèvement de la polycondensation de la matrice et la dispersion de la phase renforçante.

Un troisième procédé est particulièrement intéressante lorsque les constituants du polyamide renforçant: polyamide, polyacide ou leurs sels sont très incompatibles avec les constituants du polyamide matrice. On réalise dans un système permettant la polycondensation des polyamides un mélange des constituants primaires (diamine, diacide et/ou sels) ou des oligomères de masse moléculaire inférieure à 5 000 du polyamide servant de matrice et du polyamide renforçant. On effectue et on achève la polycondensation suivant les procédés habituellement utilisés pour la préparation des polyamides formant matrice. On utilise toutefois un appareillage muni d'une agitation permettant la dispersion des deux phases l'une dans l'autre.

Il va de soi que les constituants du polyamide renforçant doivent être choisis en nature et en quantité de telle façon que le polyamde obtenu à partir de ces constituants présente une température de transition vitreuse inférieure à 5°C et ait une teneur en groupement amide inférieure à 40% de celle de la résine polyamide servant de matrice.

Dans ce procédé encore les conditions opératoires sont importantes, car il faut réaliser comme dans le procédé précédemment décrit à la fois la dispersion et la polycondensation.

Enfin un quatrième procédé est particulièrement intéressant lorsque le polyamide renforçant est soluble à une température inférieure à environ 200°C dans les constituants primaires ou les oligomères du polyamide formant matrice.

Le polyamide de renforcement de masse moléculaire supérieure à 5 000 et de préférence supérieure à 15 000 est dissous dans les constituants primaires ou les oligomères du polyamide matrice et l'on achève sous agitation la polycondensation du polyamide matrice selon un procédé habituel.

Le polyamide renforçant doit présenter une température de transition vitreuse inférieure à 5°C et doit avoir une teneur en groupement amide inférieure à 40% de celle de la résine polyamide servant de matrice.

Le polyamide renforçant précipite en une deuxième phase dispersée lorsque la masse moléculaire du polyamide matrice s'élève.

Comme on peut le constater lors de la description des procédés précités, il n'est pas possible d'utiliser n'importe quel procédé avec n'importe quelle matrice et n'importe quelle phase renforçante. Un certain choix est possible qui dépend toutefois de la nature des différents constituants de leurs proportions respectives et des propriétés désirées de la composition finale.

Les compositions thermoplastiques renforcées peuvent être mises sous la forme de divers articles utiles par des techniques classiques de moulage ou d'extrusion utilisées dans la fabrication d'articles thermoplastiques, comme des pièces moulées, des produits extrudés, par exemple des tubes, des pellicules, des feuilles, des fils et fibres orientées, des statifiés et des revêtements de fils métalliques.

Les compositions selon l'invention sont caractérisées par une combinaison remarquable de propriétés, dont les plus importantes sont de remarquables propriétés de tenacité, compte tenu de la quantité du polymère renforçant présent avec la matrice de polyamide et d'aptitude à la cristallisation. Le tenacité qui peut être exceptionnellement élevée fournit une grande ductilité, et une sensibilité très réduite; aux entailles de moulage.

Un tel ensemble de propriétés et particulièrement l'élasticité même à basse température permet d'envisager de très nombreuses applications en particulier dans les domaines de la mécanique, de l'aviation, de l'automobile, de l'électronique, de l'outillage.

Les exemples qui vont suivre illustrent les divers procédées mis au point ainsi que les compositions revendiquées selon l'invention.

Dans ces exemples, un certain nombre de contrôles des constituants primaires ou des polyamides sont effectués. De même diverses propriétés des compositions sont mesurées. On indique ci-dessous les modes opératoires ou normes selon lesquels ces contrôles sont effectués.

1. Mesure du pH des solutions diluées de sel d'acide dimère et d'hexaméthylène diamine (HMD)

On utilise un ph mètre RADIOMETER PHM 62 équipé d'une électrode combinée verre-Calomel. Les mesures sont réalisées à 20°C.

L'appareil est étalonné à l'aide de deux solutions tampon à pH 7 et 9 encadrant le pH correspondant au point d'équivalence du sel d'acide dimère et d'HMD.

—Le sel étant préparé en solution à 50% dans le mélange eau-isopropanol 50/50 en poids le contrôle du pH est effectué en ramenant la concentration en sel à 10% dans le même mélange solvant.

Le pH est ajusté à $\pm$ 5/100 d'unité pH de la valeur correspondant au point d'équivalence (soit 8,75).

2. Conditionnement des polymères à l'état hygrométrique O (EH O)

Phases renforçantes: les phases renforçantes sont séchées à température ambiante, en étuve sous vide de 0,66 à 1,33 mbar (0,5 à 1 mm de mercure) sur $P_2O_5$ pendant 24 heures.

Matrices: les polymères utilisés comme matrice sont séchés en étuve à 100° sous 0,5 à 1 mm de mercure pendant 15 heures.

Les éprouvettes moulées sont placées en dessicateur sur Silicagel et séchées de nouveau 24 h à température ambiante sous 0,5 à 1 mm de mercure avant de réaliser les mesures.

3. Module en flexion à EH O et 23°C

Cette détermination est faite sur éprouvettes de type barreau de 80 x 10 x 4 mm moulées par injection, selon la recommandation ISO R 178.

4. Résistance au choc entaillé

La résistance au choc CHARPY entaillé est mesurée selon la recommandation ISO R 179.

Les déterminations sont faites sur barreau moulés ayant les dimensions suivantes L = 50 ± 0,1 mm; 1 = 6 ± 0,2 mm; e = 4 ± 0,2 mm; longeuer de l'entaille 0,8 ± 0,1; épaisseur sous entaille 2,7 ± 0,2 mm.

On opère sur impactomètre ZWICK à 23°C les éprouvettes étant conditionnées à EH O.

Le résultat est exprimé en Joule/cm2.

5. Détermination des groupements terminaux

$NH_2$: Dosage potentiométrique automatique de la solution de polymère dans le mélange phénol-eau 90/10 en poids par HCl. Le résultat est donné en équivalents gramme pour $10^6$ g de polymère.

COOH: Dissolution à chaud sous atmosphère d'azote du polymère dans l'alcool benzylique et dosage acidimétrique sous azote de cette solution chaude par une solution glycolique de potasse en présence de phénolphtaléine. Le résultat est donné en équivalent gramme pour $10^6$ g de polymère.

6. Détermination de la viscosité inhérente

Le polymère séché est mis en solution à 0,5% dans le métacrésol. On mesure le temps d'écoulement de cette solution par rapport à celui du solvant pur. Le valeur de la visocité inhérente est donnée par la formule:

$\eta$ inh. = 4,6 (log. $t_1$ — log. $t_o$)

$t_1$ = temps d'écoulement de la solution

$t_o$ = temps d'écoulement du solvant

7. Analyse microcalorimètrique

On caractérise les polymères ou les mélanges de polymères par leur viscosité intrinsèque mais aussi par les caractéristiques de fusion et de cristallisation telles que le point de fusion Tf et le point de cristallisation au refroidissement TcR dont la différence constitue la surfusion $\Delta$ caractérisant la nucléation. Une autre caractéristique de cristallisation essentiellement liée à la vitesse de croissance des cristallites, réside dans la détermination de Tg $\alpha, \alpha$ étant l'angle formé par l'horizontale de la ligne de base avec la partie initiale du pic de l'exotherme de cristallisation au refroidissement correspondant à des conditions strictes d'observation, l'horizontale de la ligne de base et le pic de l'extotherme de cristallisation étant déterminées sur la courbe obtenue lors de l'analyse par microcalorimètre différentialle de l'échantillon étudié.

Ces déterminations sont effectuées sur un échantillon soumis à des variations de températures tant en montée qu'en descente de 10°C/min.

L'amélioration de la cristallisation des compositions selon l'invention peut être évaluée soit par la diminution de $\Delta$ comparativement au coefficient $\Delta$ de la matrice polyamide soit encore par l'élévation de tg $\alpha$ qui caractérise l'accélération de la croissance des cristallites.

8. Transition vitreuse

La température de transition vitreuse correspond à la chute brutale du module de cisaillement en fonction de la température. Elle peut être déterminée sur le graphique représentant les variations du module de torsion en fonction de la température, variations mesurées par analyse thermomécanique au pendule de torsion automatique.

**0 030 903**

On précise ensuite les caractéristiques des deux matrices utilisées dans les exemples ci-après:

A. Polyhexaméthylène adipamide

| | | |
|---|---|---|
| $\eta$ inh | : | 1,173 dl/g |
| groupements terminaux COOH | : | 66,07 |
| groupements terminaux $NH_2$ | : | 45,83 |
| résistance au choc entaillé | : | $0,56^+ 0,05$ J/cm² |
| module en flexion | : | $240^+ 20$ daN/mm² |
| Tg par analyse thermomécanique | : | 55° |

Tf = 260°C

TcR = 210°C

$\Delta = 50°C$

Tg $\alpha = 17$

| | | |
|---|---|---|
| Teneur en groupements amides pour 100 g | : | 0,885 |
| Masse moléculaire moyenne en nombre | : | 17.900 |

B. Polycaprolactame

| | | |
|---|---|---|
| $\eta$ inh | : | 1,263 dl/g |
| groupements terminaux COOH | : | 45,7 |
| groupements terminaux $NH_2$ | : | 35,16 |
| résistance au choc entaillé (stabilisé à 100°C) | : | $0,616^+ 0,04$ J/cm² |
| module en flexion | : | $248^+ 8$ daN/mm² |
| Tg par analyse thermomécanique | : | 41°C |

Tf = 225°C

TcR = 173°C

$\Delta = 52°C$

Tg $\alpha = 28,5$

| | | |
|---|---|---|
| Teneur en groupements amides pour 100 g | : | 0,885 |
| Masse moléculaire moyenne en nombre | : | 25.000 |

Exemple 1

*Préparation des polycondensats à faibles teneurs en groupements amides pour phases renforçantes.*
1) Préparation du polyamide d'acide dimère et d'hexaméthylène diamine (polymère 1)
1.1 Préparation du mélange stoechiométrique acide dimère/hexaméthylènediamine.

Dans un réacteur de 3 litres muni d'un agitateur à hélice, pouvant travailler sous atmosphère d'azote, muni d'une ampoule de coulée de 500 ml et d'un robinet permettant d'effectuer des prélèvements à la partie inférieure sont chargés:

8

**0 030 903**

—dimère d'acide gras ayant un taux de monomère de 0,03% et un taux de trimère voisin de 3% (vendu sous la marque déposée

Empol 1010 par Unilever Emery)  500 g
—Isopropanol  300 g

Le mélange est homogénéisé et le volume libre du réacteur est purgé par l'azote. On introduit ensuite dans la masse agitée, par coulée régulière, en une heure environ 100 g d'hexaméthylène diamine pure mise au préalable en solution dans 300 g d'eau permutée.

La solution limpide obtenue est homogénéisée durant 30 minutes.

On effectue un petit prélèvement d'environ 10 cm3 que l'on dilue par un mélange eau/isopropanol (50/50 en poids) de façon à amener la concentration du sel à 10%. La valeur du pH de cette solution diluée est inférieure à celle du pH au point d'équivalence.

Dans la solution concentrée, on introduit 1,6 g d'une solution d'hexaméthylènediamine à 50% dans le mélange eau/isopropanol (50/50 en poids). La solution est homogénéisée durant 30 minutes puis on effectue à nouveau une mesure du pH en solution diluée. La valeur du pH de la solution diluée atteint à plus ou moins cinq centièmes d'unité pH, celle du pH au point d'équivalence (8,67). On obtient ainsi une solution stoechiométrique d'acide dimère et d'hexaméthylènediamine.

1.2. Préparation du polyamide

Dans un autoclave de 1 litre muni d'un système d'agitation (agitateur à ancre raclant tournant à 10—50 t/minute), d'une colonne à distiller (hauteur 40 cm, diamètre intérieur: 2,5 cm — garnissage multiknit) et d'un système permettant purge et balayage à l'azote sont chargés 800 g de la solution stoechiométrique d'acide dimère et d'hexaméthylène diamine. L'autoclave est purgé 3 fois en appliquant une pression de 6 bars d'azote suivi d'une détente jusqu'à pression atmosphérique. La masse est ensuite chauffée progressivement en agitant (50 t/minute) sous léger balayage d'azote. Les solvants sont distillés régulièrement en 90 minutes en portant la température de la masse de 90°C à 180°C. La masse est ensuite portée à 270°C en une heure. L'agitation est réduite à 10 t/minutes et la masse maintenue à 270°C durant deux heures. La masse maintenue en agitation à 270°C est mise sous un vide de 13,3 mbar en 45 minutes, le vide est maintenu durant 30 minutes. L'agitation est arrêtée, le vide cassé sous azote et le polymère extrudé de l'autoclave sous une pression de 5 bars d'azote dans un bac de refroidissement à eau.

Le polymère obtenu, transparent et très faiblement coloré en jaune présente les caractéristiques suivantes:

—pf déterminé par microcalorimétrie différentielle  =  86°C

—Tg°C par analyse thermomécanique  =  −20°C

—groupement COOH  =  69,8

—groupement $NH_2$  =  6,8

—module en flexion à EHO 23°C  =  18 daN/mm²

—teneur en groupements amides pour 100 g  =  0,305

Exemple 2

*Préparation du polyamide de dodécaneméthylène diamine — Acide dimère*

2.1. Préparation du mélange stoechiométrique acide dimère — Dodécaméthylène diamine.
On utilise l'appareillage décrit à l'exemple 1.
Dans le réacteur sont chargés:

—Dimère d'acide gras ayant un taux de monomère de 0,03% et un taux de trimère de 3% (vendu sous la marque déposée

Empol 1010 par Unilever EMERY)  571 g

—eau isopropanol (50/50 P/P)  571 g

—Dodécaméthylènediamine (Provenance HULS)  200 g

L'acide dimère et la solution eau isopropanol 50/50 étant introduits dans le réacteur on agite sous azote pour homogénéiser. On ajoute sous agitation en 1 heure par petites fractions la dodécaméthylène

9

diamine. On agite encore pendant 30 min après la fin de l'addition; la solution est alors parfaitement limpide et homogène.

On effectue un prélèvement d'environ 10 cm³ que l'on dilue par un mélange eau isopropanol 50/50 en poids de façon à amener la concentration en sel à 10%. La valeur du pH de cette solution est supérieure à celle correspondant au point d'équivalence. On ajoute alors 5,7 g d'Empol 1010 en dispersion dans eau/isopropanol (5,7 g) la solution est de neuveu homogénéiser pendant 30 min. On effectue à nouveau une mesure du pH en solution diluée. La valeur du pH de la solution diluée atteint à $\pm$ 0,05 unité pH celle des pH au point d'équivalence (8,54). On obtient ainsi une solution stoechiométrique d'Empol 1010 et de dodécaméthylènediamine.

### 2.2 Préparation du polyamide

On utilise l'appareillage décrit à l'exemple 1. On introduit dans l'autoclave 800 g de la solution stoechiométrique d'acide dimère et de dodécaméthylène diamine. On procéde ensuite comme il est décrit dans le paragraphe 1.2. Le polymère obtenu est transparent et faiblement coloré en jaune, il présente les caractéristiques suivantes:

| | | |
|---|---|---|
| —Pf par microcalorimétrie différentielle | : | 86°C |
| —Tg par analyse thermomécanique | : | —15°C |
| —groupements COOH | : | 57,15 |
| —groupements NH$_2$ | : | 8,73 |
| —viscosité inhérente | : | 0,661 dl/g |
| —module en torsion à 20°C | : | 8,5 daN/mm² |
| —teneur en groupements amides pour 100 g | : | 0,27 |

### Exemple 3
*Préparation et propriétés du polyamide de diamino-1-10 dioxa 4,7 décane et d'acide dimère*

3.1. Préparation du mélange stoechiométrique acide dimère Diamino-1,10-Dioxa 4,7 décane On utilise l'appareillage décrit à l'exemple 1.

Dans le réacteur sont chargés

Dimère d'acide gras ayant un taux de monomère de 0,03% et un taux de trimère de 3% (vendu sous la marque déposée EMPOL 1010 par

| | |
|---|---|
| UNILEVER EMERY | 571 g |
| —Eau isopropanol (50/50 P/P) | 747 g |
| —Diamino-1,10 Dioxa 4,7 décane | 176 g |

L'acide dimère et la solution eau isopropanol 50/50 étant introduits dans le réacteur, on agite sous azote pour homogénéiser. On ajoute en 1 heure 176 g de diamino-1,10 dioxa-4,7 décane. On agite encore 20 min après le fin de l'addition. On effectue alors un prélèvement d'environ 10 cm³ que l'on dilue par le mélange eau-isopropanol 50/50 pour amener la concentration en sel à 10%. La valeur du pH de cette solution est supérieure à celle correspondant au point d'équivalence. On ajoute alors 3 g d'EMPOL 1010 en dispersion dans 3 g du mélange eau-isopropanol 50/50. La solution est de nouveau homogénéiseé pendant 30 min. On effectue le contrôle du pH en solution diluée à 10%, la valeur du pH de cette solution atteint à $\pm$ 0,05 d'unité pH celle du pH au point d'équivalence (8,61). On obtient ainsi une solution stoechiométrique d'acide dimère et de diamine-1,10 dioxa-4,7 décane.

### 3.2. Préparation du polyamide

On utilise l'appareillage décrit dans l'exemple 1. On introduit dans l'autoclave 820 g de la solution stoechiométrique d'acide dimère et de diamino-1,10 dioxa-4,7 décane. On procède ensuite comme il est décrit dans la paragraphe 1.2. Le polymère obtenu est transparent faiblement coloré en jaune, il présente les caractéristiques suivantes:

# 0 030 903

—Tg par analyse thermomécanique — −30°C

—groupements COOH — 58

—groupements NH$_2$ — 19,80

—viscosité inhérente — 0,512 dl/g

—module en torsion à 20°C — 1,4 daN/mm²

—teneur en groupements amides pour 100 g — 0,28

## Exemple 4
*Préparation et propriétés du polyamide de diamine dimère et d'acide dimère*

On opère dans un réacteur pyrex agité et équipé sous circulation d'azote. On introduit à température ambiante 20 g de diamine dimère ayant un indice d'amine de 195—205 et un indice d'iode de 10—20 (vendu sous la marque déposée VERSAMINE 52 par GENERAL MILLS CHEMICAL Inc.) et 20,60 g d'acide dimère (Empol 1010).

On agite à température ambiante sous azote. La température est portée à 270° en 1 heure et on maintient pendant 1 heure à cette température sous agitation. On obtient ainsi une masse présentant une viscosité élevée en fin de réaction, on note une très légère coloration jaune. Le polymère présente les caractéristiques suivantes:

—pas de Pf net déterminé par microcalorimétrie différentielle

—Tg: déterminé par microcalorimétrie différentielle   :   −30°C

—viscosité inhérente   :   0,55 dl/g

—teneur en groupements amides pour 100 g   :   0,182

Le module de ce produit est sensiblement égal à celui du polyamide précédent.

## Exemple 5
*Préparation et propriétés du polyamide préparé à partir d'hexaméthylène diamine (HMD), de bishexaméthylène triamine (BHMTA) et d'acide dimère*

On opère dans un réacteur en verre de 1 litre avec agitation ancre en acier inox. L'appareil est équipé pour travailler sous courant d'azote. Le chauffage est assuré par immersion dans un bain d'huile thermorégulé.

On réalise la préparation d'un copolyamide contenant en poids 50% de chacun des deux polyamides: hexaméthylène diamine-acide dimère et BHMTA-acide dimère.

On introduit dans le réacteur 577,6 g d'acide dimère 61.87 g d'hexaméthylène diamine et 102,17 g de bishexaméthylène triamine purifiée par distillation. Le réacteur est purgé sous azote et immergé dans le bain à 90°C. On agite et porte la température à 200°C en 1 heure. On maintient pendant 3 heures à 200°C sous agitation. Le polymère obtenu est soutiré sous légère pression d'azote; il est très légèrement coloré en jaune, il présente les caractéristiques suivantes:

—Tg par analyse thermomécanique   :   −14°C

—Viscosité inhérente   :   0,833 dl/g

—teneur en groupements amides pour 100 g   :   0,285

—Module en torsion à 20°C   :   32 daN/mm²

Ce polymère chauffé à 260°C sur une plaque chauffante ou en réacteur agité, réticule sur lui-même en quelques minutes en donnant un composé infusible.

La préparation de ce polyamide permet de cerner les caractéristiques du polyamide qui sera utilisé comme phase renforçante dans l'exemple 9.

## Exemple 6
*Préparation d'une phase mixte polyamide à base d'hexaméthylène diamine et d'acide dimère—copolymère (éthylène-dérivés acryliques).*

Un mélange 50/50 en poids de polyamide obtenu à partir d'hexaméthylène diamine et d'acide dimère selon l'exemple 1 et d'un copolymère obtenu à partir d'éthylène, d'acide méthacrylique et

11

d'ester méthacrylique (vendu sous la marque déposée LUPOLEN A 2910 MX) est réalisé à l'aide d'une boudineuse monovis (diamètre de vis D 25 mm et longueur 20 D) équipée d'une pompe de titrage.

On travaille à 175—180°C. Le mélange extrudé sous forme de jonc est très souple, élastique, blanchit à l'étirage.

Teneur en groupements amides pour 100 g = 0,153.

### Exemple 7

Dans un dispositif comprenant une vis animée d''un mouvement rotatif et alternatif de type BUSS et chauffé à une teméprature de 280°C on introduit un mélange constitué en poids par 80 parties de polyhexaméthylène adipamide tel que décrit plus haut (servant de matrice) et 20 parties de polyamide obtenu selon l'exemple 1 comportant des groupes terminaux carboxyliques.

Le débit de l'appareil est de 8 kg/heure et le temps de séjour du mélange de polymère est environ de 3 à 4 min.

On obtient un mélange de polymère dont on détermine la résistance au choc CHARPY entaillé. On trouve une résistance de 0,95 J/cm² comparativement au polyamide seul servant de matrice dont la résistance an choc CHARPY entaillé est de 0,56 J/cm², on observe une amélioration importante.

### Exemple 8

Dans un dispositif comprenant une vis animée d'un mouvement rotatif et alternatif de type BUSS et chauffé à une température de 280°C, on introduit un mélange constitué en poids par 80 parties de polyhexaméthylène adipamide tel que décrit plus haut (servant de matrice) et 20 parties de polyamide obtenu selon l'exemple 4 comportant des groupes terminaux carboxyliques.

Le débit de l'appareil est de 8 kg/heure et le temps de séjour du mélange de polymère est environ de 3 à 4 min.

La composition obtenue présente des propriétés améliorées concernant principalement la résistance au choc CHARPY entaillé.

### Exemple 9

On opère comme indiqué à l'exemple 8 mais avec 20 parties du mélange polyamide préparé à l'exemple 5. La composition présente les propriétés suivantes:

$\Delta = 33°C$

$Tg\ \alpha = 83$

Taille des particules comprise entre 0,1 et 1 $\mu$m.

### Exemple 10

Dans une boudineuse monovis dont le diamètre de la vis D est de 25 mm et de longueur 20 D équipée d'une pompe de titrage et chauffée à 275°C, on introduit un mélange constitué en poids par 80 parties de polyhexaméthylène adipamide tel que décrit plus haut (servant de matrice) et 20 parties du mélange de polyamide et de copolymère éthylène — dérivés acryliques tel que décrit à l'exemple 6.

Le mélange est extrudé sous forme de jonc puis granulé. Le produit obtenu dans ces conditions est compact alors que le mélange polyhexaméthylène adipamide (80 parties en poids) — copolymère (éthylène — dérivés acryliques) (20 parties en poids) réalisé dans des conditions analogues conduit à un mélange qui se présente sous la forme d'un jonc contenant plus ou moins de cavités gazeuses du fait de la dégradation thermique du copolymère éthylénique.

La composition selon l'invention présente les propriétés suivantes:

$\Delta = 35°C$

$Tg\ \alpha = 80$

Taille des particules comprise entre 0,1 et 1 $\mu$m.

Après stabilisation de 1 heure à 100°C: résistance au choc entaillé 1,406 $\pm$ 0,06 J/cm² et module en flexion 196,50 $\pm$ 3,22 daN/mm².

### Exemples 11 et 12

Dans un autoclave inox de capacité 1 litre, on introduit à température ambiante 280 g de polycaprolactame (matrice) et 120 g de polyamide d'acide dimère préparé à l'exemple 1, le tout sous forme de granulés.

Après purge de l'appareillage à l'azote, on porte la température de la masse à l'intérieur de l'autoclave à 200°C en 35 minutes.

On continue le chauffage et quand la température atteint 250°C minimum, on met en route l'agitation à 5 t/min. La température est portée à 270°C en 1 heure. On agite encore 4 heures à 270°C. Puis on soutire le mélange fondu sous pression d'azote en le recueillant dans l'eau sous forme d'un jonc de 2 mm de diamètre environ que l'on granule.

Par étude de ce mélange en microcalorimétre différentielle on remarque que le composite présente les deux fusions cristallines caractéristiques des constituants de départ. De plus on constate que le mélange ne présente pas d'évolution significative pour un temps d'homogénéisation qui varie de 10 à 240 minutes à une température de 270°C.

**0 030 903**

On refait exactement le même essai mais avec 360 g de polycaprolactame et 40 g du polymère préparé à l'exemple 1.

On trouvera sur le tableau ci-après les propriétés des mélanges obtenus.

### Exemple 13

On opère comme indiqué à l'exemple 10 avec 600 g de polycaprolactame (matrice) et 66,6 g de polyamide préparé selon l'exemple 2. Après purge de l'appareillage à l'azote, on porte la température de la masse à 270°C en 1 heure sous une agitation de 10 t/min. On agite ensuite 3 heures à 270°C et on recueille ensuite le mélange comme précédemment sous forme d'un jonc qui est granulé.

On remarque par étude en microcalorimétrie différentielle que les 2 polyamides engagés au départ restent bien individualisés; la taille des particules dispersées étant globalement comprise entre 0,1 et 1 $\mu$m. On trouvera sur le tableau ci-après les propriétés du mélange obtenu.

### Exemples 14 à 17

Les quatre exemples suivants ont été réalisés selon le second procédé d'obtention de compositions selon l'invention tel que décrit en page 11. Ce procédé consiste à introduire le polyamide correspondant à la phase souple dispersé dans un prépolyamide. Le prépolyamide utilisé dont la viscosité inhérente est de l'ordre de 0,9 à 0,95 dl/g correspond au produit obtenu en fin de la décompression lors d'un cycle de polycondensation classique de l'adipate d'hexaméthylène diamine.

Dans un autoclave en inox de 1 litre on charge une solution aqueuse à 50% d'adipate d'hexaméthylène diamine, et 1,80 g environ d'une solution aqueuse à 10% d'acide acétique. On porte sous agitation la température de la masse à 220°C, ce qui correspond à une pression autogène de vapeur d'eau de 18 bars. On distille alors l'eau en 1 h 30 sous 18 bars, en portant la température de la masse à 260°C. Puis on décomprime lentement en 1 h 30 tout en portant la température de la masse à 275°C.

On introduit alors dans l'autoclave la quantité désirée du polyamide choisi, de haut poids moléculaire et on agite de nouveau pendant 1 heure à 260°C pour homogénéiser le mélange. Ce mélange est enfin soutiré sous pression d'azote et coulé dans l'eau.

On trouvera sur le tableau ci-joint les propriétés des mélanges obtenus.

On remarquera une nette diminution de la surfusion ($\Delta$) et une élévation de tg $\alpha$ par rapport à la matrice en polyhexaméthylène diamine.

Dans l'exemple 14, on charge 800 g de solution aqueuse à 50% d'adipate d'hexaméthylène diamine et 86 g du polyamide préparé à l'exemple 1.

Dans l'exemple 15, on charge 800 g de solution aqueuse à 50% d'adipate d'hexaméthylène diamine et 38 g du polyamide préparé à l'exemple 1.

Dans l'exemple 16, on charge 800 g de solution aqueuse à 50% d'adipate d'hexaméthylène diamine et 86 g du polyamide préparé à l'exemple 2.

Dans l'exemple 17, on charge 800 g de solution aqueuse à 50% d'adipate d'hexaméthylène diamine et 86 g du polyamide préparé à l'exemple 3.

13

| EXAMPLE | NATURE DE LA MATRICE ET POURCENTAGE | NATUDE DE LA PHASE RENFORCANTE SELON EXEMPLES | $\Delta = Tf - T_cR$ | Tg $\alpha$ | RESISTANCE AU CHOC en J/cm³ | MODULE EN FLEXION EN daN/mm² | TAILLE DES PARTICULES DISPERSEES |
|---|---|---|---|---|---|---|---|
|  | A: polyhexaméthylène adipamide 100% | — | 50°C | 17 | 0,56 ± 0,05 | 240 ± 20 | — |
|  | B: polycaprolactame 100% | — | 52°C | 28,5 | 0,616 ± 0,04 | 248 ± 8 | — |
| 11 | B 70% | Ex 1 30% | 43°C | 52,5 | — | 168 ± 9 | 0,1 à 1 $\mu$m |
| 12 | B 90% | Ex 1 10% | 33°C | 71,4 | 0,607 ± 0,04 | 216 ± 4,7 | " |
| 13 | B 90% | Ex 2 10% | 34°C | 105 | 1,20 ± 0,02 | 217 ± 5 | " |
| 14 | Prèpolymère A 80% | Ex 1 20% | 32°C | 33 | 0,86 ± 0,1 | 224 ± 7 | " |
| 15 | Prépolymère A 90% | Ex 1 10% | 32°C | 47,5 | 0,70 ± 0,06 | 231 ± 8 | " |
| 16 | Prèpolymère A 80% | Ex 2 20% | 33°C | 63 | 0,91 ± 0,1 | 218 ± 13 | " |
| 17 | Prépolymère A 80% | Ex 3 20% | 33°C | 52,5 | 0,98 ± 0,1 | 191,5 ± 6 | " |
|  |  |  |  |  | Ces deux mesures après stabilisation d'une heure à 100°C | | |

Exemple 18

On exemplifie ici le troisième procédé selon l'invention. On prépare le sel obtenu par action d'une diamine dimère (vendu sous la marque déposée VERSAMINE 52 par GENERAL MILLS CHEMICAL INC.) ayant un indice d'amine de 195—205 et un indice d'iode de 10—20, sur un mélange d'acides dont l'un est essentiellement un diacide dimère vendu sous la marque déposée EMPOL 1010 (voir plus haut exemple 1) et dont l'autre est essentiellement un diacide trimère constitué par 90% en poids environ d'acide trimère ayant environ 54 atomes de carbone et par 10% en poids environ d'acide dimère, ce produit étant vendu par Unilever Emery sous la marque déposée Empol 1041.

Dans un réacteur de 1 litre agité et équipé pour travailler sous atmosphère d'azote on charge:
—120,68 g de diamine dimère
—21,14 g de diacide trimère (Empol 1041)
—108,17 g de diacide dimère (Empol 1010)
—250 g de perchloréthylène

On laisse à température ambiante et sous agitation pendant une heure. La masse réactionnelle devient très rapidement homogène après introduction des réactifs.

On réalise ensuite la polycondensation de ce sel en présence d'adipate d'hexaméthylène diamine. Dans un autoclave en acier inox de 1 litre équipé pour travailler sous pression, on introduit:
—393 g d'adipate d'hexaméthylène diamine sec
—200 g d'eau distillée
—169,5 g de solution à 50% dans le perchloéthylène du sel préparé comme indiqué ci-dessus.
—0,18 g d'acide acétique
et environ 1 ml d'un antimousse à 0,6% dans le perchloréthylène.

Après plusieurs purges à l'azote sous pression, on met en route l'agitation et on distille le perchloréthylène sous pression atmosphèrique en portant la température de la masse réactionnelle à 175°C. On stoppe alors la distillation et on chauffe à 235°C. La pression autogène de vapeur d'eau atteint 18 bars. On distille alors toujours sous cette pression, la vapeur d'eau en portant la température à 260°C. On décomprime ensuite en 90 minutes en portant la température à 275°C. La réaction est parachevée par une cuisson de 15 min sous courant d'azote à 275°C.

La composition ainsi obtenue a les propriétés suivantes:
$Tf = 258°C$
$T_cR = 215°C$
$Tg\ \alpha = 81$
$\Delta = 43°C.$

Exemple 19

On exemplifie le quatrième procédé selon l'invention en polycondensant du caprolactame contenant en solution du polyamide obtenu selon l'exemple 1, en présence d'acide amino caproïque.

On opère dans un réacteur en verre de 100 cm³ agité, équipé pour travailler sous vide, chauffé par un bain d'alliage thermorégulé.

On charge dans le réacteur à température ambiante 20 g de caprolactame 5 g de polyamide selon l'exemple 1 ($\eta$ inh. = 0,864) et 3 g d'acide amino-1,6 hexanoïque. Après plusieurs purges à l'azote on immerge le réacteur dans le bain chauffant régulé à 140°C. On agite et on fait monter la température. Vers 180°C la masse devient homogène par dissolution du polyamide dans le caprolactame et les oligomères de ce dernier. On continue à élever régulièrement la température. A 210°C environ, on remarque que la masse réactionnelle devient hétérogène. La température atteint 270°C après 2 heures de réaction. La masse est alors hétérogène, louche et sa viscosité s'élève rapidement. On maintient 15 min à 270°C puis on établit en 30 min environ un vide de 1,33 mbars pour éliminer le caprolactame libre qui n'a pas réagi. On maintient 20 min sous vide à 270°C. Le polymère obtenu en fin de réaction est louche et possède les caractéristiques suivantes:
$Tf = 220°C$
$T_cR = 181°C$
$Tg\ \alpha = 44,4$
$\Delta = 39°C$

Ce résultat montre que l'on a bien dispersion du polyamide préparé selon l'exemple 1 dans le polycaprolactame sans qu'il y ait d'interaction chimique significative entre les polyamides engagés.

**Revendications**

1. Compositions polyphasées à base de polyamide ayant des propriétés physiques améliorées, caractérisées en ce qu'elles sont constituées essentiellement par 50 à 99% en poids d'une phase formant matrice qui est une résine polyamide de type nylon d'une masse moléculaire moyenne en nombre d'au moins 5 000 et de 1 à 50% en poids d'au moins une autre phase dispersée sous forme de particules ayant une taille comprise entre 0,01 et 10 μm constituée par un ou plusieurs polyamides d'une masse moléculaire moyenne en nombre d'au moins 5000 présentant une teneur en groupements amides inférieurs à 40% de celle de la résine polyamide formant matrice et ayant une tempéra-

**0 030 903**

ture de transition vitreuse inférieure à 5°C, la phase dispersée pouvant renfermer en outre en proportion minoritaire, un ou plusiers autres polymères qui présentent vis à vis des polyamides utilisés pour la phase dispersée une miscibilité totale ou partielle dans une gamme de températures comprises entre 20°C et 300°C.

2. Compositions polyphasées selon la revendication 1, caractérisées en ce qu'elles sont constituées par 55 à 99% en poids d'une phase formant matrice et par 1 à 45% en poids de phase(s) dispersée(s).

3. Compositions polyphasées selon la revendication 1 caractérisées en ce qu'elles sont constituées essentiellement par 70 à 90% en poids d'une phase formant matrice qui est un polyamide de masse moléculaire moyenne en nombre supérieure à 10 000 et de 10 à 30% en poids d'au moins une autre phase dispersée sous forme de particules ayant une taille comprise entre 0,05 et 3 $\mu$m constituée en tout ou partie par un polyamide ayant une température de transition vitreuse inférieure à −10°C.

4. Compositions selon la revendication 1 caractérisées en ce que le polyamide formant matrice est un polycaprolactame ou un polyhexaméthylène adipamide.

5. Compositions selon la revendication 1 caractérisées en ce que le polyamide de la phase dispersée est obtenu en tout ou partie à partir d'un acide dimère ayant un nombre d'atome de carbone supérieur ou égal à 36.

6. Compositions selon la revendication 1 caractérisées en ce que le polyamide de la phase dispersée est obtenu en tout ou partie à partir d'une diamine dimère ayant un nombre d'atome de carbone supérieur ou égal à 36.

7. Compositions selon la revendication 5 caractérisées en ce que le polyamide de la phase dispersée est obtenu en tout ou partie à partir d'un polyamide comprenant des fonctions éther ayant un nombre d'atome de carbone supérieur ou égal à 8.

8. Compositions selon la revendication 5 caractérisées en ce que le polyamide de la phase dispersée est obtenu en tout ou partie à partir d'une polyamine diprimaire secondaire.

9. Compositions selon la revendication 8 caractérisées en ce que la polyamine diprimaire secondaire est la bishexaméthylène triamine.

10. Compositions selon la revendication 6 caractérisées en ce que le polyamide de la phase dispersée est obtenu en tout ou partie à partir d'un mélange de diamine dimère et de polyamine diprimaire secondaire.

11. Compositions selon la revendication 10 caractérisées en ce que le polyamide de la phase dispersée est obtenu à partir d'un mélange de diamine dimère ayant un nombre d'atome de carbone supérieur ou égal à 36 et de bis hexaméthylène triamine.

12. Compositions selon la revendication 5 caractérisées en ce que la polyamide de la phase dispersée est obtenu à partir d'un mélange d'acide dimère et de polyacide ayant une fonctionalité égale ou supérieure à 3.

13. Compositions selon la revendication 12 caractérisées en ce que la polyacide est un acide trimère.

14. Compositions selon la revendication 1 caractérisées en ce que la phase dispersée est constituée par un mélange de polyamide et de copolymères statistiques, blocs ou greffés dérivés de monomères insaturés ou polyinsaturés comportant de 0,5 à 10% en mole de groupements réactifs vis à vis des polyamides, ces groupements étant choisis parmi les groupements acides carboxyliques, aminés, anhydrides, sulfonés ou amidiques.

15. Compositions selon la revendication 14 caractérisées en ce que le copolymère dérivé de monomère insaturé est un copolymère éthylèneacide méthacrylique-esters méthacryliques.

16. Procédé d'obtention de compositions selon la revendication 1, caractérisé en ce que l'on soumet à un effet de cisaillement, dans un système clos, à une température supérieure au point de fusion du polyamide servant de matrice et dans des conditions telles que l'on obtienne la dispersion d'une phase dispersée sous forme de particules de 0,01 à 10 $\mu$m, un mélange d'un polyamide servant de matrice ayant un poids moléculaire en nombre supérieur à 5000 et de préférence supérieur à 10 000 et d'au moins un autre polyamide servant de phase dispersée ayant un poids moléculaire en nombre supérieur à 5 000 et de préférence supérieur à 15 000.

17. Procédé d'obtention de compositions selon la revendication 1, caractérisé en ce que l'on soumet à un effet de cisaillement, dans un système permettant un dégazage, à une température supérieure au point de fusion du polyamide servant de matrice et dans des conditions telles que l'ont obtienne la dispersion d'une phase dispersée sous forme de particules de 0,01 à 10 $\mu$m, un mélange d'un polyamide servant de matrice ayant une masse moléculaire moyenne en nombre supérieure à 2 000 et d'au moins un autre polyamide servant de phase dispersée ayant une masse moléculaire en nombre supérieure à 5 000 et de préférence supérieur à 15 000, de manière à réaliser en même temps la dispersion du ou des polyamide(s) servant de phase dispersée et la finition de la polycondensation du polyamide servant de matrice.

18. Procédé d'obtention de compositions selon la revendication 1, caractérisée en ce que, lorsque les constituants primaires du ou des polyamide(s) servant de phase dispersée sont très incompatibles avec les constituants primaires du polyamide servant de matrice, on effectue simultanément la poly-

16

## 0 030 903

condensation du polyamide servant de matrice et celle du ou des polyamide(s) servant de phase dispersée ainsi que la dispersion de la phase dispersée dans la matrice dans des conditions telles que la phase dispersée soit sous forme de particules de 0,01 à 10 μm.

19. Procédé d'obtention de compositions selon la revendication 1, caractérisé en ce que, lorque le ou les polyamide(s) servant de phase dispersée sont solubles dans les constituants primaires du polyamide servant de matrice, on dissout le ou les polyamide(s) servant de phase dispersée dans les monomères du polyamide qui servira de matrice et on achève la polycondensation du polyamide matrice dans des conditions de cisaillement telles que la phase renforçante qui précipite conduit à une phase dispersée sous forme de particules de 0,01 à 10 μm.

20. Produits conformés obtenus à partir de compositions selon les revendications 1 à 15.

**Patentansprüche**

1. Mehrphasige Massen auf Polyamidbasis mit verbesserten physikalischen Eigenschaften, dadurch gekennzeichnet, daß sie im wesentlichen aus 50 bis 99 Gew.-% einer die Grundmasse bildenden Phase, die ein Polyamidharz vom Nylontyp mit einer durchschnittlichen Molekularmasse von zumindest 5000 ist, und aus 1 bis 50 Gew.-% zumindest einer anderen in Form von Teilchen mit einer Teilchengröße von 0.01 bis 10 μm dispergierten Phase, die gebildet ist aus einem oder mehreren Polyamiden mit einer durchschnittlichen Molekularmasse von zumindest 5000, die einen Gehalt an Amidgruppen aufweist, der unterhalb 40% jenes des die Grundmasse bildenden Polyamidharzes liegt, und eine Glasübergangstemperatur unterhalb 5°C haben, besteht, wobei die dispergierte Phase außerdem einen geringen Anteil eines oder mehrerer anderer Polymere enthalten kann, die gegenüber den für die dispergierte Phase verwendeten Polyamiden eine vollständige oder teilweise Mischbarkeit in einem Temperaturbereich zwischen 20°C und 300°C aufweisen.

2. Mehrphasige Massen nach Anspruch 1, dadurch gekennzeichnet, daß sie aus 55 bis 99 Gew.-% einer die Grundmasse bildenden Phase und aus 1 bis 45 Gew.-% dispergierter Phase (dispergierten Phasen) bestehen.

3. Mehrphasige Massen nach Anspruch 1, dadurch gekennzeichnet, daß sie im wesentlichen aus 70 bis 90 Gew.-% einer die Grundmasse bildenden Phase, die ein Polyamid mit einer durchschnittlichen Molekularmasse von mehr als 10 000 ist, und aus 10 bis 30 Gew.-% zumindest einer weiteren in Form von Teilchen mit einer Teilchengröße zwischen 0,05 und 3 μm dispergierten Phase, die zur Gänze oder teilweise aus einem Polyamid mit einer Glasübergangtemperatur unterhalb −10°C gebildet ist, bestehen.

4. Massen nach Anspruch 1, dadurch gekennzeichnet, daß das die Grundmasse bildende Polyamid ein Polycaprolactam oder ein Polyhexamethylenadipamid ist.

5. Massen nach Anspruch 1, dadurch gekennzeichnet, daß das Polyamid der dispergierten Phase zur Gänze oder teilweise erhalten wird, ausgehend von einer dimeren Säure mit einer Kohlenstoffatomanzahl größer oder gleich 36.

6. Massen nach Anspruch 1, dadurch gekennzeichnet, daß das Polyamid der dispergierten Phase zur Gänze oder teilweise erhalten wird, ausgehend von einem dimeren Diamin mit einer Kohlenstoffatomanzahl großer oder gleich 36.

7. Massen nach Anspruch 5, dadurch gekennzeichnet, daß das Polyamid der dispergierten Phase zur Gänze oder teilweise erhalten wird, ausgehend von einem Ätherfunktionen aufweisenden Polyamid mit einer Kohlenstoffatomanzahl größer oder gleich 8.

8. Massen nach Anspruch 5, dadurch gekennzeichnet, daß das Polyamid der dispergierten Phase zur Gänze oder teilweise erhalten wird, ausgehend von einem sekundären diprimären Polyamin.

9. Massen nach Anspruch 8, dadurch gekennzeichnet, daß das sekundäre diprimäre Polyamin das Bishexamethylentriamin ist.

10. Massen nach Anspruch 6, dadurch gekennzeichnet, daß das Polyamid der dispergierten Phase zur Gänze oder teilweise erhalten wird, ausgehend von einer Mischung von dimerem Diamin und sekundärem diprimärem Polyamin.

11. Massen nach Anspruch 10, dadurch gekennzeichnet, daß das Polyamid der dispergierten Phase erhalten wird, ausgehend von einer Mischung von dimerem Diamin mit einer Kohlenstoffatomanzahl größer oder gleich 36 und von Bishexamethylentriamin.

12. Massen nach Anspruch 5, dadurch gekennzeichnet, daß das Polyamid der dispergierten Phase erhalten wird, ausgehend von einer Mischung einer dimeren Säure und einer Polysäure mit einer Funktionalität gleich oder größer 3.

13. Massen nach Anspruch 12, dadurch gekennzeichnet, daß die Polysäure eine trimere Säure ist.

14. Massen nach Anspruch 1, dadurch gekennzeichnet, daß die dispergierte Phase gebildet ist aus einer Mischung von Polyamid und statistischen Copolymeren, Block- oder Pforpfderivaten von ungesättigten oder polyungesättigten Monomeren, die 0,5 bis 10 Mol-% an gegenüber Polyamiden reaktionsfähigen Gruppierungen aufweisen, welche ausgewählt sind aus den aminierten, anhydrierten, sulfonierten oder amidierten Carbonsäuregruppierungen.

15. Massen nach Anspruch 14, dadurch gekennzeichnet, daß das vom ungesättigten Monomeren abgeleitete Copolymer ein Äthylen/Methacrylsäure/Methacrylester-Copolymer ist.

17

16. Verfahren zur Herstellung von Massen nach Anspruch 1, dadurch gekennzeichnet, daß man eine Mischung eines als Grundmasse dienenden Polyamids mit einem Molekulargewicht von mehr als 5000 und vorzugsweise mehr als 10 000 und zumindest eines anderen als disperse Phase dienenden Polyamids mit einem Molekulargewicht von mehr als 5000 und vorzugsweise mehr als 15 000 in einem geschlossenen System bei einer Temperatur oberhalb des Schmelzpunktes des als Grundmasse dienenden Polyamids und unter solchen Bedingungen, daß man die Dispersion einer dispersen Phase in Form von Teilchen von 0,01 bis 10 $\mu$m erhält, einer Scherwirkung unterwirft.

17. Verfahren zur Herstellung von Massen nach Anspruch 1, dadurch gekennzeichnet, daß man eine Mischung eines als Grundmasse dienenden Polyamids mit einer durchschnittlichen Molekularmasse von mehr als 2000 und zumindest eines weiteren als dispergierte Phase dienenden Polyamids mit einer Molekularmasse von mehr als 5000, vorzugsweise mehr als 15000, in einem eine Entgasung zulassenden System bei einer Temperatur oberhalb des Schmelzpunktes des als Grundmasse dienenden Polyamids und unter solchen Bedingungen, daß man die Dispersion einer dispersen Phase in Form von Teilchen von 0,01 bis 10 $\mu$m erhält, einer Scherwirkung unterwirft, derart, daß gleichzeitig die Dispersion des bzw. der als dispergierte Phase dienenden Polyamids bzw. Polyamide und die Beendigung der Polykondensation des als Grundmasse dienenden Polyamids stattfindet.

18. Verfahren zur Herstellung von Massen nach Anspruch 1, dadurch gekennzeichnet, daß man, wenn die Primärbestandteile des oder der als dispergierte Phase dienenden Polyamids bzw. Polyamide mit den Primärbestandteilen des als Grundmasse dienenden Polyamids sehr unverträglich sind, gleichzeitig die Polykondensation des als Grundmasse dienenden Polyamids und jene des oder der als dispergierte Phase dienenden Polyamids oder Polyamide sowie die Dispersion der dispergierten Phase in der Grundmasse unter solchen Bedingungen ausführt, daß die dispergierte Phase in Form von Teilchen von 0,01 bis 10 $\mu$m vorliegt.

19. Verfahren zur Herstellung von Massen nach Anspruch 1, dadurch gekennzeichnet, daß man, wenn das oder die als dispergierte Phase dienende Polyamid oder Polyamide in den Primärbestandteilen des als Grundmasse dienenden Polyamids löslich sind, das oder die als dispergierte Phase dienende(n) Polyamid(e) in den Monomeren des die Grundmasse bildenden Polyamids auflöst und die Polykondensation des Grundmassenpolyamids unter solchen Scherbedingungen durchführt, daß die ausfallende Verstärkungsphase eine dispergierte Phase in Form von Teilchen von 0,01 bis 10 $\mu$m ergibt.

20. Die entsprechenden Produkte, erhalten aus den Massen nach den Ansprüchen 1 bis 15.

## Claims

1. Polyamide-based polyphase compositions having improved physical properties, characterised in that they consist essentially of 50 to 99% by weight of a matrix-forming phase which is a polyamide resin of the nylon type having a number-average molecular weight of at least 5,000, and 1 to 50% by weight of at least one other phase dispersed in the form of particles having a size of between 0.01 and 10 $\mu$m, consisting of one or more polyamides having a number-average molecular weight of at least 5,000, having a proportion of amide groups less than 40% of that of the matrix-forming polyamide resin, and having a glass transition temperature below 5°C, it also being possible for the disperse phase to contain a minor proportion of one or more other polymers which are totally or partially miscible, in a temperature range of between 20°C and 300°C, with the polyamides used for the disperse phase.

2. Polyphase compositions according to Claim 1, characterised in that they consist of 55 to 99% by weight of a matrix-forming phase and 1 to 45% by weight of disperse phase(s).

3. Polyphase compositions according to Claim 1, characterised in that they consist essentially of 70 to 90% by weight of a matrix-forming phase which is a polyamide having a number-average molecular weight of more than 10,000, and 10 to 30% by weight of at least one other phase dispersed in the form of particles having a size of between 0.05 and 3 $\mu$m, consisting wholly or partly of a polyamide having a glass transition temperature below −10°C.

4. Compositions according to Claim 1, characterised in that the matrix-forming polyamide is a polycaprolactam or a polyhexamethyleneadipamide.

5. Compositions according to Claim 1, characterised in that the polyamide of the disperse phase is obtained wholly or partly from a dimeric acid in which the number of carbon atoms is greater than or equal to 36.

6. Compositions according to Claim 1, characterised in that the polyamide of the disperse phase is obtained wholly or partly from a dimeric diamine in which the number of carbon atoms is greater than or equal to 36.

7. Compositions according to Claim 5, characterised in that the polyamide of the disperse phase is obtained wholly or partly from a polyamide containing ether groups in which the number of carbon atoms is greater than or equal to 8.

8. Compositions according to Claim 5, characterised in that the polyamide of the disperse phase is obtained wholly or partly from a secondary bis-primary polyamine.

9. Compositions according to Claim 8, characterised in that the secondary bis-primary polyamine is bis-hexamethylenetriamine.

10. Compositions according to Claim 6, characterised in that the polyamide of the disperse phase is obtained wholly or partly from a mixture of a dimeric diamine and a secondary bis-primary polyamine.

11. Compositions according to Claim 10, characterised in that the polyamide of the disperse phase is obtained from a mixture of a dimeric diamine in which the number of carbon atoms is greater than or equal to 36, and bis-hexamethylenetriamine.

12. Compositions according to Claim 5, characterised in that the polyamide of the disperse phase is obtained from a mixture of dimeric acid and a polybasic acid in which the number of functional groups is equal to or greater than 3.

13. Compositions according to Claim 12, characterised in that the polybasic acid is a trimeric acid.

14. Compositions according to Claim 1, characterised in that the disperse phase consists of a mixture of a polyamide and random, block or graft copolymers derived from unsaturated or polyunsaturated monomers containing from 0.5 to 10 mol% of groups reactive towards polyamides, these groups being chosen from amongst carboxylic acid, amine, anhydride, sulphone or amide groups.

15. Compositions according to Claim 14, characterised in that the copolymer derived from an unsaturated monomer is an ethylene/methacrylic acid/methacrylic acid ester copolymer.

16. Process for the preparation of compositions according to Claim 1, characterised in that a mixture of a matrix-forming polyamide having a number-average molecular weight of more than 5,000 and preferably of more than 10,000, and at least one other polyamide forming a disperse phase and having a number-average molecular weight of more than 5,000 and preferably of more than 15,000, is subjected to a shear effect, in a closed system, at a temperature above the melting point of the matrix-forming polyamide and under conditions such as to achieve the dispersion of a disperse phase in the form of particles of 0.01 to 10 $\mu$m.

17. Process for the preparation of compositions according to Claim 1, characterised in that a mixture of a matrix-forming polyamide having a number-average molecular weight of more than 2,000, and at least one other polyamide forming a disperse phase and having a number-average molecular weight of more than 5,000 and preferably of more than 15,000, is subjected to a shear effect, in a system allowing degassing, at a temperature above the melting point of the matrix-forming polyamide and under conditions such as to achieve the dispersion of a disperse phase in the form of particles of 0.01 to 10 $\mu$m, so as to achieve, at the same time, the dispersion of the polyamide (or polyamides) forming the disperse phase and the completion of the polycondensation of the matrix-forming polyamide.

18. Process for the preparation of compositions according to Claim 1, characterised in that, if the primary constituents of the polyamide (or polyamides) forming the disperse phase are very incompatible with the primary constituents of the matrix-forming polyamide, the polycondensation of the matrix-forming polyamide is carried out simultaneously with that of the polyamide (or polyamides) forming the disperse phase, and also with the dispersion of the disperse phase in the matrix under conditions such that the disperse phase is in the form of particles of 0.01 to 10 $\mu$m.

19. Process for the preparation of compositions according to Claim 1, characterised in that, if the polyamide (or polyamides) forming the disperse phase are soluble in the primary constituents of the matrix-forming polyamide, the polyamide (or polyamides) forming the disperse phase are dissolved in the monomers of the polyamide which is to form the matrix, and the polycondensation of the matrix polyamide is completed under shear conditions such that the reinforcing phase which precipitates leads to a disperse phase in the form of particles of 0.01 to 10 $\mu$m.

20. Shaped products obtained from compositions according to Claims 1 to 15.

19